# EUROPÄISCHE PATENTSCHRIFT

(11) **EP 2 929 518 B1**
(45) Veröffentlichungstag und Bekanntmachung des Hinweises auf die Patenterteilung: **28.09.2016**
(21) Anmeldenummer: 13785823.9
(22) Anmeldetag: 30.10.2013
(51) Int. Cl.: G08G 1/16, G06K 9/00

(54) **FAHRZEUGSEITIGES VERFAHREN UND FAHRZEUGSEITIGE VORRICHTUNG ZUM ERFASSEN UND ANZEIGEN VON PARKLÜCKEN FÜR EIN FAHRZEUG**
VEHICLE-SIDE METHOD AND VEHICLE-SIDE DEVICE FOR DETECTING AND DISPLAYING PARKING SPACES FOR A VEHICLE
PROCÉDÉ ET DISPOSITIF CÔTÉ VÉHICULE PERMETTANT DE DÉTECTER ET D'AFFICHER DES PLACES DE STATIONNEMENT POUR UN VÉHICULE

(30) Priorität: 05.12.2012 DE 102012023706
(43) Veröffentlichungstag der Anmeldung: 14.10.2015
(73) Patentinhaber: Daimler AG, 70327 Stuttgart (DE)
(72) Erfinder: FRANZ, Stefan, 89077 Ulm (DE); GLOGER, Joachim, 89346 Bibertal (DE); HARTL, Mathias, 71394 Kernen (DE); KRÜGER, Lars, 89073 Ulm (DE); REICHMANN, Matthias, 75395 Ostelsheim (DE)
(74) Vertreter: JENSEN & SON
(86) Internationale Anmeldenummer: PCT/EP2013/003267
(87) Internationale Veröffentlichungsnummer: WO 2014/086446

(56) Entgegenhaltungen:
- DE-A1-102008 036 009
- DE-A1-102008 049 113
- DE-B4- 10 292 327
- US-A1- 2003 108 222

## Beschreibung

Die Erfindung betrifft ein fahrzeugseitiges Verfahren und eine fahrzeugseitige Vorrichtung zum Erfassen und Anzeigen von Parklücken für ein Fahrzeug.

Aus der DE 10 2008 049 113 A1 ist ein Parkassistenzsystem für ein Fahrzeug bekannt, bei welchem eine Parklücke mittels eines ultraschallbasierten Verfahrens erfasst und eine erfasste Parklücke auf ein Bild einer Rückfahrkamera überlagert wird. Das Überlagerungsbild wird zum Beispiel auf einer Anzeige einer zentralen Verarbeitungseinheit in dem Fahrzeug angezeigt.

Aus der US2003/108222A1 ist ein Bildverarbeitungssystem bekannt, bei dem Einzelbilder von einem Totwinkelbereich zu einem Gesamtbild zusammengesetzt werden.

Die DE102008036009A1 offenbart ein Verfahren zum Schutz eines Fahrzeuges vor einer Kollision. Bei dem Verfahren werden mittels Ultraschallsensoren Abstände zu Hindernissen sowie Abmessungen der Hindernisse detektiert und auf einer Umfeldkarte wiedergegeben. Die Umfeldkarte ergibt sich aus Messzyklen zu unterschiedlichen Bezugspunkten.

In der DE 102 92 327 B4 ist ein Verfahren zur Darstellung aufeinanderfolgend aufgenommener Bilder in einer Vogelperspektive offenbart, wobei die aufgenommenen Bilder zu einem Kameragesamtbild aus einer Vogelperspektive fusioniert werden. Die Umrechnung der aufgenommenen Bilder in eine Vogelperspektive erfolgt mittels einer Bildverarbeitungseinheit, die ein Koordinatenumwandlungsteil aufweist.

Ausgehend von diesem Stand der Technik ist es die Aufgabe der vorliegenden Erfindung, ein fahrzeugseitiges Verfahren und eine fahrzeugseitige Vorrichtung zu schaffen, die im Stande sind, mehrere Parklücken für ein Fahrzeug zu erfassen und anzuzeigen und für einen Nutzer eines Fahrzeugs auswählbar zu machen.

Diese Aufgabe wird mit den in den unabhängigen Ansprüchen angegebenen Maßnahmen gelöst.

Weitere vorteilhafte Ausgestaltungen der vorliegenden Erfindung sind Gegenstand der abhängigen Ansprüche.

Gemäß einem ersten Aspekt weist ein fahrzeugseitiges Verfahren zum Erfassen und Anzeigen von Parklücken für ein Fahrzeug ein Erfassen von Umgebungsdaten und Vermessen mindestens einer Parklücke aus den Umgebungsdaten, ein Erfassen von Bildausschnitten einer Umgebung um das Fahrzeug zu unterschiedlichen Zeitpunkten, ein Zusammensetzen eines Gesamtbilds aus den zu unterschiedlichen Zeitpunkten erfassten Bildausschnitten, ein Erzeugen eines Überlagerungsbilds durch Überlagern einer der mindestens einen Parklücke entsprechenden Darstellung auf das Gesamtbild und ein Anzeigen des Überlagerungsbilds in dem Fahrzeug auf.

Gemäß einer Ausgestaltung wird das Erfassen und Vermessen der mindestens einen Parklücke unabhängig von dem Erfassen der Bildausschnitte einer Umgebung um das Fahrzeug durchgeführt.

Gemäß einer weiteren Ausgestaltung wird das Erfassen und Vermessen der mindestens einen Parklücke ultraschallbasiert oder radarbasiert durchgeführt.

Gemäß einer weiteren Ausgestaltung wird das Überlagern derart durchgeführt, dass eine Anzeige des Überlagerungsbilds metrisch richtig ist.

Gemäß einer weiteren Ausgestaltung wird das Überlagern derart durchgeführt, dass Abweichungen von einer Geradeausfahrt des Fahrzeugs bei einem Vorbeifahren an einer Parklücke kompensiert werden.

Gemäß einer weiteren Ausgestaltung werden die zu unterschiedlichen Zeitpunkten erfassten Bildausschnitte derart in dem Überlagerungsbild angeordnet, dass ihre Position proportional zu einer von dem Fahrzeug zurückgelegten Strecke ist.

Gemäß einer weiteren Ausgestaltung weist das Verfahren ein Auswählen einer in dem Überlagerungsbild vorhandenen Parklücke durch einen Nutzer und ein Durchführen eines automatischen Einparkvorgangs in die ausgewählte Parklücke oder eines Unterstützens eines Nutzers zum manuellen Einparken in die ausgewählte Parklücke auf.

Gemäß einer weiteren Ausgestaltung ist der automatische Einparkvorgang teilautomatisch oder vollautomatisch.

Gemäß einer weiteren Ausgestaltung wird das Auswählen durch Auswählen einer automatisch erzeugten Zielposition oder durch manuelles Positionieren einer Zielposition in dem Überlagerungsbild durchgeführt.

Gemäß einem zweiten Aspekt weist eine fahrzeugseitige Vorrichtung zum Erfassen und Anzeigen von Parklücken für ein Fahrzeug in einem Fahrzeug vorhandene Einrichtungen auf, die geeignet sind, das vorhergehende Verfahren und dessen Ausgestaltungen auszuführen.

Die vorliegende Erfindung wird nachstehend anhand der Beschreibung von Ausführungsbeispielen unter Bezugnahme auf die beiliegende Zeichnung näher erläutert. In der beiliegenden Zeichnung sind durchgängig durch die einzelnen Abbildungen gleiche oder entsprechende Teile mit gleichen Bezugszeichen bezeichnet.

Es zeigt:
Fig. 1 eine schematische Darstellung einer Parksituation mit einer parallelen Parklücke bzw. Längsparklücke für ein zu parkendes Fahrzeug mit einer Rückfahrkamera gemäß einem ersten Ausführungsbeispiel;
Fig. 2 eine weitere schematische Darstellung der Parksituation mit der parallelen Parklücke für das zu parkende Fahrzeug mit der Rückfahrkamera gemäß dem ersten Ausführungsbeispiel;
Fig. 3 ein Flussdiagramm eines fahrzeugseitigen Verfahrens zum Erfassen und Anzeigen von Parklücken gemäß dem ersten Ausführungsbeispiel;
Fig. 4 eine schematische Darstellung eines Überlagerungsbilds auf einer Anzeige einer zentralen Verarbeitungseinheit in dem zu parkenden Fahrzeug gemäß dem ersten Ausführungsbeispiel.

Nachstehend erfolgt die Beschreibung eines ersten Ausführungsbeispiels.

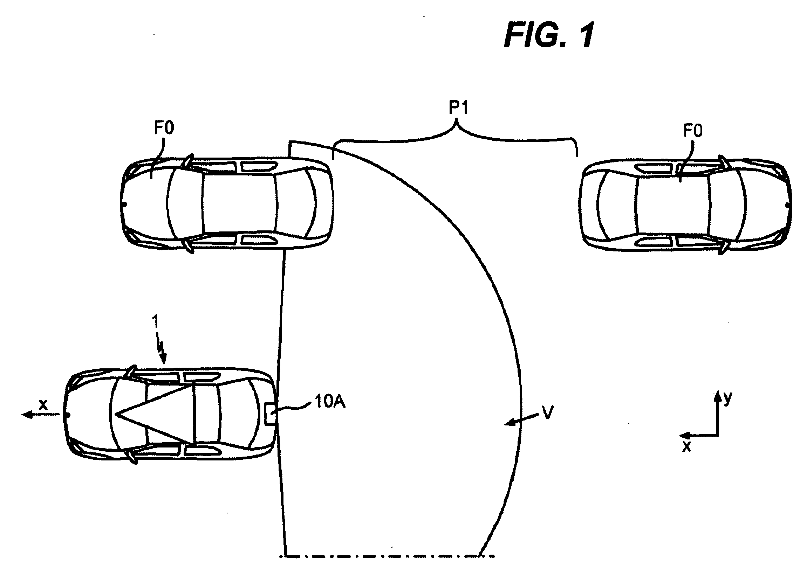

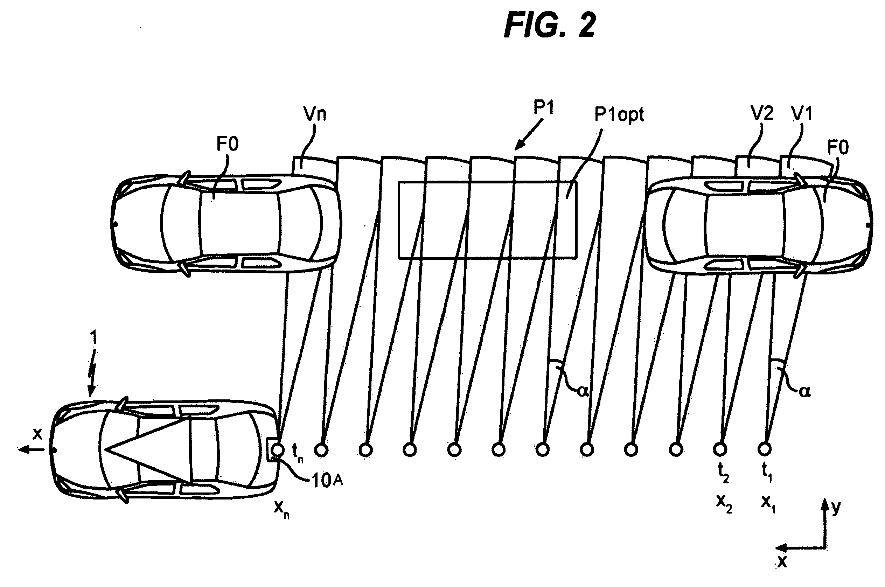

Unter Bezugnahme auf Fig. 1 und Fig. 2 wird die grundlegende Funktionsweise des ersten Ausführungsbeispiels beschrieben.

Fig. 1 zeigt eine schematische Darstellung einer Parksituation mit einer parallelen Parklücke für ein zu parkendes Fahrzeug mit einer Rückfahrkamera gemäß dem ersten Ausführungsbeispiel.

In Fig. 1 bezeichnet das Bezugszeichen 1 ein zu parkendes Fahrzeug, bezeichnet das Bezugszeichen F0 parkende Fahrzeuge, bezeichnet das Bezugszeichen P1 eine parallele Parklücke, bezeichnet das Bezugszeichen 10A eine Kamera des zu parkenden Fahrzeugs 1 und bezeichnet das Bezugszeichen V einen Aufnahmebereich der Kamera 10A.

Die Kamera 10A ist zum Beispiel eine Rückfahrkamera des zu parkenden Fahrzeugs 1 oder eine Kamera in einem Seitenspiegel des zu parkenden Fahrzeugs 1. Allgemein ausgedrückt kann jede Kamera verwendet werden, die einen Aufnahmebereich aufweist, der geeignet ist, Bilder mit Positionen von potentiellen Parklücken aufzunehmen.

Wenn sich das zu parkende Fahrzeug 1 in der in Fig. 1 gezeigten Richtung x bewegt, wird von der Kamera 10A ein Videostrom aufgenommen, der mehreren zu unterschiedlichen Zeitpunkten von der Kamera 10A aufgenommen Bildern entspricht. Gleichzeitig wird mit einer Umgebungssensorik eine Position der Parklücke P1 erfasst und vermessen. Die Umgebungssensorik kann zum Beispiel ultraschallbasiert oder radarbasiert sein.

Fig. 2 zeigt eine weitere schematische Darstellung der Parksituation mit der parallelen Parklücke für das zu parkende Fahrzeug mit der Rückfahrkamera gemäß dem ersten Ausführungsbeispiel.

In Fig. 2 bezeichnen die Bezugszeichen t₁, t₂, ..., tₙ unterschiedliche Zeitpunkte, bezeichnen die Bezugszeichen x₁, x₂, ..., xₙ unterschiedliche Positionen, bezeichnen die Bezugszeichen V1, V2, ... , Vn unterschiedliche Bildausschnitte, bezeichnet das Bezugszeichen α einen Winkel eines jeweiligen Bildausschnitts und bezeichnet das Bezugszeichen P1opt eine optimale Parkposition in der Parklücke P1.

Wie es in Fig. 2 gezeigt ist, nimmt die Kamera 10A während des Fahrens des Fahrzeugs 1 in Richtung x unterschiedliche Bildausschnitte V1, V2, ..., Vn zu unterschiedlichen Zeitpunkten t₁, t₂, ... , tₙ und/oder an unterschiedlichen Positionen x₁. x₂, ... , xₙ auf und setzt die unterschiedlichen Bildausschnitte V1, V2, ..., Vn zu einem Gesamtbild zusammen. Zusätzlich zu dem Aufnehmen der unterschiedlichen Bildausschnitte V1, V2, ..., Vn nimmt die Umgebungssensorik kontinuierlich eine Umgebung um das Fahrzeug betreffende Daten auf, um die Position von Parklücken P1 zu erfassen und zu vermessen.

Auf einer Anzeigeeinrichtung in dem Fahrzeug 1 wird ein Überlagerungsbild angezeigt, dass durch Überlagern einer Darstellung, die den erfassten Parklücken P1 entspricht, auf das Gesamtbild erzielt wird, wie es nachfolgend detaillierter beschrieben wird.

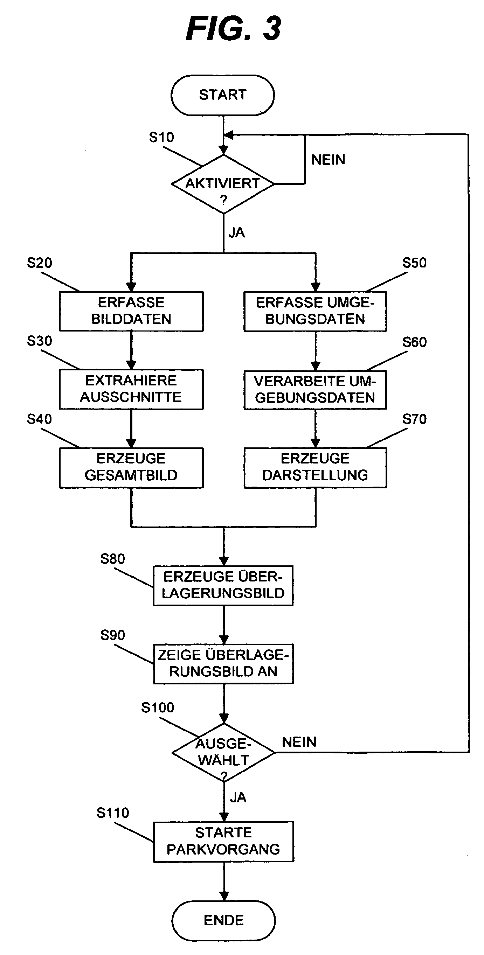

Unter Bezugnahme auf Fig. 3 wird die detaillierte Funktionsweise des ersten Ausführungsbeispiels beschrieben.
Fig. 3 zeigt ein Flussdiagramm eines fahrzeugseitigen Verfahrens zum Erfassen und Anzeigen von Parklücken gemäß dem ersten Ausführungsbeispiel.

Wie es in Fig. 3 gezeigt ist, wird in Schritt S10 entschieden, ob eine Verarbeitung zum Erfassen und Anzeigen von Parklücken P1 aktiviert ist. Das Aktivieren kann abhängig von bestimmten Bedingungen sein, wie zum Beispiel einer eingeschalteten Zündung des Fahrzeugs 1, einem eingelegten Vorwärtsgang bzw. einer eingelegten Vorwärtsfahrstufe des Fahrzeugs 1, einem Unterschreiten eines vorbestimmten Geschwindigkeitsschwellwerts, einer zweckmäßigen Kombination von einigen oder allen von diesen usw.

Falls eine Entscheidung in Schritt S10 "NEIN" ist, kehrt die Verarbeitung zu Schritt S10 zurück. Falls die Entscheidung in Schritt S10 "JA" ist, schreitet die Verarbeitung zu Schritt S20 und parallel zu Schritt S50 fort.

In Schritt S20 werden mittels der Kamera 10A Bilddaten in dem Aufnahmebereich V der Kamera 10A erfasst. Zum Erfassen der Bilddaten nimmt die Kamera 10A, wie es in Fig. 1 gezeigt ist, in dem Aufnahmebereich V der Kamera 10A Bilddaten einer Umgebung um das Fahrzeug 1 auf. In dem Fall der in Fig. 1 gezeigten Rückfahrkamera als Kamera 10A beträgt ein Aufnahmewinkel der Kamera 10A annähernd 180° bezogen auf eine Richtung y in Fig. 1.

Nach Schritt S20 schreitet die Verarbeitung zu Schritt S30 fort. In Schritt S30 wird aus den erfassten Bilddaten ein Bildausschnitt extrahiert. Genauer gesagt wird aus den in Schritt S20 erfassten Bilddaten ein relevanter Bildausschnitt extrahiert, der erforderlich ist, um ein eine Umgebung um das Fahrzeug anzeigendes Gesamtbild zu erzeugen, in dem eine oder mehrere potentielle Parklücken vorhanden sind. Wie es in Fig. 1 gezeigt ist, entspricht der Bildausschnitt vorzugsweise einem Teil des Aufnahmebereichs V mit einem Winkel α. Der Winkel α kann 5 bis 45°, bevorzugter 10 bis 30°, noch bevorzugter 10 bis 20° des gesamten Aufnahmebereichs V bezogen auf die Richtung y in Fig. 1 sein.

Nach Schritt S30 schreitet die Verarbeitung zu Schritt S40 fort. In Schritt S40 wird aus dem extrahierten Bildausschnitt und in vorhergehenden Durchläufen der Schritte S20 und S30 erzielten Bildausschnitten V1, V2, ..., Vn ein Gesamtbild erzeugt. Die Bildausschnitte V1, V2, ..., Vn von jeweiligen Durchläufen können einen schmalen kegelförmigen Bereich umfassen, also in der Art eines Radarstrahlenkegels geformt sein. Die Abmessung bzw. der Aufnahmewinkel α der Bildausschnitte V1, V2, ..., Vn kann, zum Beispiel auch in Abhängigkeit der Fahrgeschwindigkeit des Fahrzeugs 1, derart festgelegt werden, dass die Bildausschnitte V1, V2, ..., Vn lediglich teilweise, insbesondere lediglich in einem Abschnitt entsprechend y-Koordinaten, in welchen Parklücken P1 vorliegen, überlappen.

Die das Gesamtbild zusammensetzenden Bildausschnitte V1, V2, ... , Vn können in aufeinanderfolgenden Durchläufen der Schritte S20 und S30 zum Beispiel zu definierten Zeitpunkten t1, t2, ... tn, die ein vorbestimmtes Zeitintervall zueinander aufweisen, oder an definierten Positionen x1, x2, ... , xn des Fahrzeugs 1 aufgenommen werden, die ein vorbestimmtes Abstandsintervall zueinander aufweisen.

Parallel zu den Schritten S20 bis S40 werden Schritte S50 bis S70 durchgeführt.

In Schritt S50 werden mittels der Umgebungssensorik Umgebungsdaten erfasst. Als Umgebungssensorik können zum Beispiel Ultraschallsensoren verwendet werden, die im Stande sind, Abstände von Objekten, wie zum Beispiel parkenden Fahrzeugen F0, zu dem Fahrzeug 1 zu erfassen und entsprechende Umgebungsdaten auszugeben.

Nach Schritt S50 schreitet die Verarbeitung zu Schritt S60 fort. In Schritt S60 werden die Umgebungsdaten verarbeitet. Das Verarbeiten wird derart durchgeführt, dass in aufeinanderfolgenden Durchläufen des Schritts S50 erfasste Umgebungsdaten miteinander kombiniert werden. Falls die in aufeinanderfolgenden Durchläufen des Schritts S50 erfassten Umgebungsdaten anzeigen, dass zwischen den parkenden Fahrzeugen F0, wie sie in Fig.1 und Fig. 2 gezeigt sind, ein freier Raum vorhanden ist, der einem vorbestimmten Abstand der parkenden Fahrzeuge F0 entspricht, der zum Einparken des Fahrzeugs 1 ausreichend ist, wird der freie Raum mit diesem vorbestimmten Abstand als Parklücke P1 festgelegt. Falls der freie Raum so groß ist, dass das Fahrzeug 1 an mehreren nicht überlappenden Stellen eingeparkt werden kann, werden in dem freien Raum mehrere Parklücken P1 festgelegt. Die festgelegten Parklücken P1 werden gespeichert und stehen für eine weitere Verarbeitung zur Verfügung. Zusätzlich können mittels der Umgebungsdaten andere Hindernisse als die parkenden Fahrzeuge 1 erfasst werden.

Nach Schritt S60 schreitet die Verarbeitung zu Schritt S70 fort. In Schritt S70 wird aus den verarbeiteten Umgebungsdaten eine Darstellung erzeugt, die den erfassten Parklücken P1 entspricht.

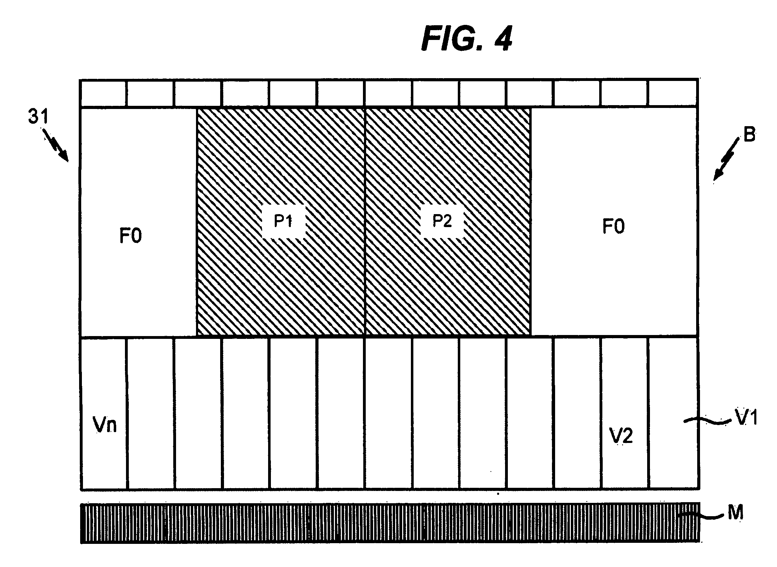

Nach Schritt S70 schreitet die Verarbeitung zu Schritt S80 fort. In Schritt S80 wird aus dem in Schritt S40 erzielten Gesamtbild und der in Schritt S70 erzielten Darstellung ein Überlagerungsbild erzeugt. Das dargestellte Überlagerungsbild wird unter Bezugnahme auf Fig. 4 beschrieben.

Fig. 4 zeigt eine schematische Darstellung des Überlagerungsbilds auf einer Anzeige 31 einer zentralen Verarbeitungseinheit in dem zu parkenden Fahrzeug 1 gemäß dem ersten Ausführungsbeispiel.

Wie es in Fig. 4 durch schraffierte Bereiche gezeigt ist, werden in dem Überlagerungsbild zum Beispiel festgelegte Parklücken P1 und P2 zwischen den parkenden Fahrzeugen F0 angezeigt.

Nach Schritt S80 schreitet die Verarbeitung zu Schritt S90 fort.

In Schritt S90 wird das in Schritt S80 erzielte Überlagerungsbild auf einer Anzeigeeinrichtung in dem Fahrzeug 1 angezeigt. Das Gesamtbild kann derart mit in dem Fahrzeug 1 vorhandenen Odometrie- bzw. Wegedaten und/oder mittels der Umgebungssensorik erfassten Umgebungsdaten der festgelegten Parklücken und ggf. erfassten Hindernissen zu dem Überlagerungsbild fusioniert werden, dass das Überlagerungsbild metrisch richtig ist. Zusätzlich können Abweichungen von einer Geradeausfahrt des Fahrzeugs 1 beim Vorbeifahren an Parklücken, wie zum Beispiel Kurvenfahrten, die zu unerwünschten Bildeffekten in dem Überlagerungsbild führen würden, kompensiert werden.

Beim Erzeugen des Überlagerungsbilds können unterschiedliche virtuelle Projektionsobjekte verwendet werden: ein Zylinder mit einer Hauptachse entlang einer Fahrtrajektorie des Fahrzeugs 1, ein Prisma mit einer Hauptachse entlang der Fahrtrajektorie des Fahrzeugs 1, Seiten auf dem Boden und als virtuelle Wand, ein Flächenmodell mit Hindernis neben der Parklücke als nahe Wand und keinem Hindernis als ferne Wand. Die Bildausschnitte V1, V2, ..., Vn werden derart in dem Gesamtbild und demgemäß in dem Überlagerungsbild angeordnet, dass eine jeweilige Position eines Bildausschnitts proportional zu einer von dem Fahrzeug 1 zurückgelegten Strecke ist.

Für den Fall der in Fig. 1 und Fig. 2 gezeigten Rückfahrkamera als Kamera 10 A wird in Schritt S30 eine Bildinformation als ein Bildausschnitt aus einem äußeren Randbereich einer Optik der Kamera 10A extrahiert. In diesem äußeren Randbereich sind bei großen Öffnungswinkeln der Kamera 10A Verzeichnungen und Verzerrungen des Bildausschnitts groß. Daher kann eine Rektifizierung, wie zum Beispiel eine Zylinderprojektion, an dem Bildausschnitt durchgeführt werden, um die Verzeichnungen und Verzerrungen zu verringern oder zu kompensieren.

Für eine in dem Seitenspiegel vorgesehene Kamera 10A wird ein Bildausschnitt aus einem Mittenbereich einer Optik der Kamera 10A extrahiert, in dem je einzelnem Bildelement weniger Umgebung als in dem Fall der Rückfahrkamera abgebildet wird. In diesem Fall kann anhand einer Fahrstrecke des Fahrzeugs 1 eine Position in dem Gesamtbild ausgewählt werden und können in Schritt S40 Daten des Bildausschnitts ggf. skaliert in das Gesamtbild kopiert werden.

In dem in Fig. 4 gezeigten Überlagerungsbild kann zusätzlich ein geeigneter Maßstab angezeigt werden. Dieser Maßstab kann zum Beispiel eine Darstellung des eigenen Fahrzeugs 1 als Grafik, Icon, Maßpfeile usw. oder eine Länge einer zum Einparken erforderlichen Parklücke und Positionen sein, an denen Fahrmanöver, wie zum Beispiel ein Einschlagen eines Lenkrads des Fahrzeugs 1, auszuführen sind. Das Anzeigen eines derartigen Maßstabs kann abhängig von einem jeweiligen Zustand des Fahrzeugs 1, wie zum Beispiel einer Wahl eines Gangs des Fahrzeugs 1, und/oder von zuvor gefahrenen Manövern, wie zum Beispiel langsame Vorwärtsfahrt, Anhalten, Rückwärtsgang des Fahrzeugs 1 einlegen, sein. Ebenso kann in dem Überlagerungsbild eine Meterskala M zum besseren Verständnis einer Darstellung eingeblendet sein.

Weiterhin kann eine Breite und/oder eine Länge einer Parklücke P1, P2 zum Beispiel durch Überlagern auf die Parklücke P1, P2 direkt eingeblendet werden. Dadurch wird verdeutlicht, welche Parklücke P1, P2 bezüglich einer Breite und/oder Länge optimal ist.

Durch Projektion auf einen in dem Überlagerungsbild angezeigten Boden können weitere Informationen, wie zum Beispiel ein Abstand zwischen dem Fahrzeug 1 und parkenden Fahrzeugen F0 und/oder anderen Hindernissen angezeigt werden. Dies kann zum Beispiel mittels einer farblichen Kodierung erfolgen.

Die zuvor genannten Informationen können in dem Fahrzeug 1 ebenso alternativ oder zusätzlich in einer berechneten Draufsicht auf das Fahrzeug 1 und die Umgebung angezeigt werden.

Nach Schritt S90 schreitet die Verarbeitung zu Schritt S100 fort. In Schritt S100 wird entschieden, ob eine der in dem Überlagerungsbild angezeigten Parklücken ausgewählt worden ist. Falls eine Entscheidung in Schritt S100 "NEIN" ist, kehrt die Verarbeitung zu Schritt S10 zurück.

Das Auswählen einer der Parklücken kann durch manuelles Auswählen durch einen Nutzer des Fahrzeugs 1 zum Beispiel durch Betätigen eines Bedienelements 1, wie zum Beispiel eines Dreh/Drückstellers, oder Berühren der als Touchscreen ausgebildeten Anzeige 31 der Verarbeitungseinheit des Fahrzeugs 1 usw. durchgeführt werden. Das Auswählen kann ein reines Auswählen einer automatisch erzeugten Zielposition, wie zum Beispiel P1opt in Fig. 2, und/oder ein manuelles Positionieren einer Zielposition in dem Überlagerungsbild beinhalten. Es werden lediglich Positionen zugelassen, die von dem Fahrzeug 1 fahrdynamisch, zum Beispiel aufgrund eines Wendekreises, einer Fahrzeuggröße und/oder einer aktuellen Fahrzeugposition, erreichbar sind.

Fall die Entscheidung in Schritt S100 "JA" ist, schreitet die Verarbeitung zu Schritt S110 fort. In Schritt S110 wird ein Parkvorgang auf der Grundlage der ausgewählten Parklücke gestartet.

Der Parkvorgang kann ein automatischer Einparkvorgang in die ausgewählte Parklücke oder ein Vorgang eines Unterstützens eines Nutzers zum manuellen Einparken in die ausgewählte Parklücke sein. In dem Fall des automatischen Parkvorgangs kann dieser entweder teilautomatisch oder vollautomatisch sein.

In dem Fall des Unterstützens kann bei dem Auswählen der Zielpositionen vorgesehen sein, dass der Bereich angezeigt wird, der von dem Fahrzeug 1 beim Fahren zu einer markierten Zielposition befahren werden würde, um zuzulassen, dass der Nutzer des Fahrzeugs 1 beim Auswählen der Zielposition Hindernisse vermeidet.

Weiterhin können dem Nutzer in dem Fall des Unterstützens nach dem Auswählen der Zielposition zum Beispiel optische, akustische oder haptische Hinweise gegeben werden, wie zum Beispiel "Jetzt rechts einlenken".

Nachstehend erfolgt die Beschreibung eines zweiten Ausführungsbeispiels.

Es ist anzumerken, dass das zweite Ausführungsbeispiel ausgenommen der nachfolgend beschriebenen Änderungen identisch zu dem zuvor beschriebenen ersten Ausführungsbeispiel ist.

In dem zuvor beschriebenen ersten Ausführungsbeispiel werden in Schritt S30 Bildausschnitte V1, V2, ..., Vn aus dem gesamten Aufnahmebereich V der Kamera 10A extrahiert, um aus den extrahierten Bildausschnitten V1, V2, ..., Vn das Gesamtbild zu erzeugen. Gemäß dem zweiten Ausführungsbeispiel wird anstelle einer Extraktion der Bildausschnitte V1, V2, ..., Vn in Schritt S30 eine Optikeinrichtung verwendet, um in Schritt S20 lediglich Bilddaten der Bildausschnitte V1, V2, ..., Vn zu erfassen und aus diesen erfassten Bildausschnitten V1, V2, ..., Vn in Schritt S40 das Gesamtbild zu erzeugen. Das heißt, in diesem Fall wird Schritt S30 weggelassen.

Genauer gesagt können die Bildausschnitte V1, V2, ..., Vn jeweils einen schmalen kegelförmigen Bereich umfassen, also in der Art eines Radarstrahlenkegels geformt sein und zu mehreren aufeinanderfolgenden Zeitpunkten t1, t2, ..., tn aufgenommen werden. Die Abmessung bzw. der Aufnahmewinkel α der Bildausschnitte V1, V2, ..., Vn kann, zum Beispiel auch in Abhängigkeit der Fahrgeschwindigkeit des Fahrzeugs 1, derart festgelegt werden, dass die Bildausschnitte V1, V2, ..., Vn lediglich teilweise überlappen, insbesondere lediglich in einem Abschnitt entsprechend y-Koordinaten, in welchen die Parklücken P1 vorliegen. Hierdurch kann eine zu verarbeitende Datenmenge niedrig gehalten werden. Für den Fall, dass sich der Nutzer für eine Parklücke P1 entscheidet, kann der Aufnahmewinkel α dann wieder vergrößert werden und kann die Kameravorrichtung 10A als Rückfahrkamera mit einem möglichst breiten Blickfeld verwendet werden. Anders ausgedrückt ist der Aufnahmewinkel α variabel einstellbar, insbesondere mittels einer Optikeinrichtung, die bevorzugt in Kommunikation mit einer Steuereinheit der Kameravorrichtung 10A und/oder des Fahrzeugs 1 steht. Bevorzugt liegt der Aufnahmewinkel α für das Erfassen der Bildausschnitte V1, V2, ..., Vn zwischen 5 und 45 Grad, weiter bevorzugt zwischen 10 und 30 Grad, besonders bevorzugt zwischen 10 und 20 Grad. Bevorzugt liegt der Aufnahmewinkel α für das Erfassen der Umgebung bei einer Funktion als Rückfahrkamera, bei welcher ein kontinuierliches Aufzeichnen zweckdienlich sein kann, zwischen 45 und 180 Grad, weiter bevorzugt zwischen 135 und 180 Grad, besonders bevorzugt zwischen 145 und 175 Grad.

Es ist anzumerken, dass, obgleich die Kamera in den vorhergehenden Ausführungsbeispielen eine Rückfahrkamera des zu parkenden Fahrzeugs ist, zum Beispiel ebenso eine Kamera in einem Seitenspiegel des zu parkenden Fahrzeugs verwendet werden kann. Allgemein ausgedrückt kann jede Kamera verwendet werden, die einen Aufnahmebereich aufweist, der geeignet ist, Bilder mit Positionen von potentiellen Parklücken aufzunehmen. Weiterhin besteht ebenso die Möglichkeit, mehrere Kameras, wie zum Beispiel die Kameras eines Surround-View-Systems, das mittels der Kameras eine Umgebung um das Fahrzeug aufnimmt und eine Draufsicht auf das Fahrzeug aus der aufgenommenen Umgebung berechnet, zu verwenden und jeweilige Bildausschnitte der mehreren Kameras gleichzeitig zu dem Gesamtbild zusammenzusetzen.

Es ist weiter anzumerken, dass, obgleich die vorhergehenden Ausführungsbeispiele eine Anwendung an einer oder mehreren Längsparklücken beschreiben, die vorliegende Erfindung ebenso an einer anderen Art von Parklücken, wie zum Beispiel Querparklücken oder Diagonalparklücken, anwendbar ist.

Ebenso ist weiter anzumerken, dass das vorhergehend beschriebene fahrzeugseitige Verfahren bzw. die vorhergehend beschriebene fahrzeugseitige Vorrichtung in Verbindung mit dem Auswählen einer festgelegten Parklücke und dem Starten des Parkvorgangs Teil eines Parkassistenzsystems des Fahrzeugs 1 zum Durchführen eines automatischen, das heißt teilautomatischen oder vollautomatischen Parkvorgangs oder zum Durchführen eines Unterstützens eines Nutzers bei einem manuellen Parkvorgang sind.

Obgleich die vorliegende Erfindung vorhergehend anhand von Ausführungsbeispielen unter Bezugnahme auf die beiliegende Zeichnung beschrieben worden ist, versteht es sich, dass verschiedene Ausgestaltungen und Änderungen durchgeführt werden können, ohne den Umfang der vorliegenden Erfindung zu verlassen, wie er in den beiliegenden Ansprüchen definiert ist.

Bezüglich weiterer Vorteile und Merkmale der vorliegenden Erfindung wird ausdrücklich auf die Offenbarung der Zeichnung verwiesen.

## Patentansprüche

1. Fahrzeugseitiges Verfahren zum Erfassen und Anzeigen von Parklücken (P1, P2) für ein Fahrzeug, das aufweist:
Erfassen von Bildausschnitten (V1, V2, ..., Vn) einer Umgebung um das Fahrzeug zu unterschiedlichen Zeitpunkten (t1, t2, ..., tn);
Zusammensetzen eines Gesamtbilds aus den zu unterschiedlichen Zeitpunkten (t1, t2, ..., tn) erfassten Bildausschnitten (V1, V2, ..., Vn);
**gekennzeichnet durch**,
Erfassen von Umgebungsdaten und Vermessen mindestens einer Parklücke (P1, P2) aus den Umgebungsdaten, wobei die Parklücke (P1, P2) einen zum Parken des Fahrzeuges ausreichenden freien Raum aufweist und wobei das Erfassen und Vermessen der mindestens einen Parklücke (P1, P2) unabhängig von dem Erfassen der Bildausschnitte (V1, V2, ..., Vn) einer Umgebung um das Fahrzeug durchgeführt wird;Erzeugen eines Überlagerungsbilds (B) **durch** Überlagern einer der mindestens einen Parklücke (P1, P2) entsprechenden Darstellung auf das zusammengesetzte Gesamtbild; und Anzeigen des Überlagerungsbilds (B) in dem Fahrzeug.

2. Verfahren nach Anspruch 1,
**dadurch gekennzeichnet, dass**
das Erfassen und Vermessen der mindestens einen Parklücke (P1, P2) ultraschallbasiert oder radarbasiert durchgeführt wird.

3. Verfahren nach Anspruch 1 oder 2,
**dadurch gekennzeichnet, dass**
das Überlagern derart durchgeführt wird, dass eine Anzeige des Überlagerungsbilds (B) metrisch richtig ist.

4. Verfahren nach einem der Ansprüche 1 bis 3,
**dadurch gekennzeichnet, dass**
das Überlagern derart durchgeführt wird, dass Abweichungen von einer Geradeausfahrt des Fahrzeugs bei einem Vorbeifahren an einer Parklücke (B) kompensiert werden.

5. Verfahren nach einem der Ansprüche 1 bis 4,
**dadurch gekennzeichnet, dass**
die zu unterschiedlichen Zeitpunkten erfassten Bildausschnitte (V1, V2, ..., Vn) derart in dem Überlagerungsbild (B) angeordnet werden, dass ihre Position proportional zu einer von dem Fahrzeug zurückgelegten Strecke ist.

6. Verfahren nach einem der Ansprüche 1 bis 5, **gekennzeichnet durch**:
Auswählen einer in dem Überlagerungsbild (B) vorhandenen Parklücke (P1, P2) durch einen Nutzer; und
Durchführen eines automatischen Einparkvorgangs in die ausgewählte Parklücke (P1, P2) oder eines Unterstützens eines Nutzers zum manuellen Einparken in die ausgewählte Parklücke (P1, P2).

7. Verfahren nach Anspruch 6,
**dadurch gekennzeichnet, dass**
der automatische Einparkvorgang teilautomatisch oder vollautomatisch ist.

8. Verfahren nach Anspruch 6 oder 7,
**dadurch gekennzeichnet, dass**
das Auswählen durch Auswählen einer automatisch erzeugten Zielposition oder durch manuelles Positionieren einer Zielposition in dem Überlagerungsbild (B) durchgeführt wird.

9. Fahrzeugseitige Vorrichtung zum Erfassen und Anzeigen von Parklücken (P1, P2) für ein Fahrzeug, die in einem Fahrzeug vorhandene Einrichtungen aufweist, die geeignet sind, ein Verfahren nach einem der Ansprüche 1 bis 8 auszuführen.

## Claims

1. Vehicle-side method for detecting and indicating parking spaces (P1, P2) for a vehicle, the method comprising:
the detection of image details (V1, V1, ..., Vn) of an environment of the vehicle at different points in time (t1, t1, ...tn);
the compiling of an overall image from the image details (V1, V1, ..., Vn) detected at different points in time (t1, t1, ...tn);
**characterised by**
the detection of environment data and the measuring of at least one parking space (P1, P2), wherein the parking space (P1, P2) offers enough free space for parking the vehicle, and wherein the detection of environment data and the measuring of at least one parking space (P1, P2) are carried out independently of the detection of the image details (V1, V1, ..., Vn) of an environment of the vehicle; the generation of a superposition image (B) by superposing a view corresponding to the at least one parking space (P1, P2) on the compiled overall image; and the indication of the superposition image (B) in the vehicle.

2. Method according to claim 1,
**characterised in that**
the detection and measuring of the at least one parking space (P1, P2) are based on ultrasound or radar.

3. Method according to claim 1 or 2,
**characterised in that**
the superposition is carried out in such a way that a display of the superposition image (B) is metrically correct.

4. Method according to any of claims 1 to 3,
**characterised in that**
the superposition is carried out in such a way that deviations from a straightahead travel of the vehicle are compensated when passing a parking space (B).

5. Method according to any of claims 1 to 4,
**characterised in that**
the image details (V1, V1, ..., Vn) detected at different points in time are arranged in the superposition image (B) in such a way that their position is proportional to a distance travelled by the vehicle.

6. Method according to any of claims 1 to 5,
**characterised by**
the selection of a parking space (P1, P2) present in the superposition image (B) by the user; and
the carrying out of an automatic parking operation into the selected parking space (P1, P2) or the supporting of a user in the manual parking into the selected parking space (P1, P2).

7. Method according to claim 6,
**characterised in that**
the automatic parking operation is partially or fully automatic.

8. Method according to claim 6 or 7,
**characterised in that**
the selection is carried out by selecting an automatically generated target position or by manually positioning a target position in the superposition image (B).

9. Vehicle-side device for detecting and indicating parking spaces (P1, P2) for a vehicle, the device comprising equipment present in the vehicle which is suitable for carrying out a method according to any of claims 1 to 8.

## Revendications

1. Procédé côté véhicule destiné à détecter et afficher des places de stationnement (P1, P2) pour un véhicule qui consiste à: détecter des sections d'image (V1, V2....Vn) d'un environnement autour du véhicule à des différents moments (t1, t2....tn) ; assembler une image entière à partir des sections d'image détectées à différents moments (t1, t2....tn), **caractérisé par** la détection des données d'environnement et la mesure d'au moins une place de stationnement (P1, P2) à partir des données d'environnement, les places de stationnement (P1, P2) présentant un espace libre suffisant pour stationnement le véhicule automobile et la détection et la mesure d'au moins une place de stationnement (P1, P2) s'effectuant indépendamment de la détection des sections d'image (V1, V2...Vn) d'un environnement autour du véhicule automobile ; la production d'une image de superposition (B) par superposition de l'au moins une représentation correspondant à une place de stationnement (P1, P2) sur l'image entière assemblée ; et l'affichage de l'image de superposition (B) dans le véhicule.

2. Procédé selon la revendication 1, **caractérisé en ce que** la détection et la mesure de l'au moins une place de stationnement (P1, P2) s'effectuent par ultrasons et par radar.

3. Procédé selon la revendication 1 ou la revendication 2, **caractérisé en ce que** la superposition s'effectue de telle sorte qu'un affichage de l'image de superposition (B) est correct d'un point de vue métrique.

4. Procédé selon l'une quelconque des revendications 1 à 3, **caractérisé en ce que** la superposition s'effectue de telle sorte que des écarts d'une sortie en ligne droite du véhicule automobile lorsqu'il passe devant une place de stationnement (B) sont compensés.

5. Procédé selon l'une quelconque des revendications 1 à 4, **caractérisé en ce que** les sections d'image (V1, V2... Vn) détectées à différents moments sont disposées de telle manière dans l'image de superposition (B) que leur position soit proportionnelle à un trajet parcouru par le véhicule.

6. Procédé selon l'une quelconque des revendications 1 à 5, **caractérisé par** la sélection d'une place de stationnement (P1, P2) présente dans l'image de superposition (B) par un utilisateur ; et la réalisation d'un processus de stationnement automatique dans la place de stationnement (P1, P2) ou d'une aide d'un utilisateur au stationnement manuel dans la place de stationnement (P1, P2) sélectionnée.

7. Procédé selon la revendication 6, **caractérisé en ce que** le processus de stationnement automatique est entièrement automatique ou semi-automatique.

8. Procédé selon la revendication 6 ou la revendication 7, **caractérisé en ce que** la sélection par la sélection d'une position cible produite automatiquement ou par le positionnement manuel d'une position cible s'effectue dans l'image de superposition (B).

9. Dispositif côté véhicule destiné à détecter et à afficher des places de stationnement (P1, P2) pour un véhicule qui présente des dispositifs existants qui sont conçus pour exécuter un procédé selon l'une quelconque des revendications 1 à 8.
